Europäisches Patentamt

European Patent Office

Office européen des brevets

(11) Veröffentlichungsnummer: **0 373 369**
**A1**

## EUROPÄISCHE PATENTANMELDUNG

(21) Anmeldenummer: **89120965.2**

(51) Int. Cl.5: **H04L 27/20**

(22) Anmeldetag: **11.11.89**

(30) Priorität: **16.12.88 CH 4648/88**

(43) Veröffentlichungstag der Anmeldung:
**20.06.90 Patentblatt 90/25**

(84) Benannte Vertragsstaaten:
**CH DE FR GB LI SE**

(71) Anmelder: **ASEA BROWN BOVERI AG**
**Haselstrasse**
**CH-5401 Baden(CH)**

(72) Erfinder: **Dzung, Dacfey, Dr.**
**Albisstrasse 1**
**CH-5430 Wettingen(CH)**
Erfinder: **Ramseier, Stefan**
**Elfenaustrasse 37**
**CH-6005 Luzern(CH)**

(54) Verfahren zur Übertragung von digitalen Daten.

(57) Zur Verbesserung der spektralen Effizienz eines Verfahrens zur Uebertragung von digitalen Daten mittels kontinuierlicher Phasenmodulation, wird eine Trägerschwingung durch ein Basisbandsignal sowohl phasen- als auch amplitudenmoduliert. Dabei sind Phasen- und Amplitudenmodulation derart aufeinander abgestimmt, dass der innerhalb eines gegebenen Frequenzbandes liegende Anteil der spektralen Leistung des Basisbandsignals maximal ist.

Eine Vorrichtung zum Durchführen dieses Verfahrens umfasst einen Sender (1) mit einem L-stufiges Schieberegister (6) und einen Speicher (7a, 7b) für Inphasen- und Quadraturwerte des Basisbandsignals. Nach Massgabe des Inhalts des Schieberegisters (6) werden jeweils N Paare von Basisbandwerten aus dem Speicher (7a, 7b) ausgespeichert.

FIG.2

EP 0 373 369 A1

Xerox Copy Centre

# Verfahren zur Uebertragung von digitalen Daten

## Technisches Gebiet

Die Erfindung betrifft ein Verfahren zur Uebertragung von digitalen Daten mittels kontinuierlicher Phasenmodulation, bei welchem in einem Sender digitale Daten als Folge von Symbolen $a_k$ mit einer Symboldauer T eingelesen werden, nach Massgabe der durch eine Gedächtnislänge L gegebenen letzten L Symbole $a_{k-(L-1)}, .. , a_k$ ein Teilsignal eines Basisbandsignals erzeugt wird, wobei das Teilsignal eine der Symboldauer T entsprechende Länge hat, und eine Trägerschwingung entsprechend dem Basisbandsignal einer kontinuierlichen Phasenmodulation unterzogen wird.

## Stand der Technik

Ein Verfahren der Eingangs genannten Art ist z.B. aus der Patentschrift US-4,750,192 bekannt.

Die Signalübertragung mittels kontinuierlicher Phasenmodulation, kurz CPM genannt (Continuos Phase Modulation), hat bekanntlich die Eigenschaft der guten spektralen Effizienz. Die Modulation wird üblicherweise in der Art beschrieben, dass mittels linearer Filterung eines Datenstroms ein Basisbandsignal erzeugt wird, welches einem gewöhnlichen Frequenzmodulator zugeführt wird. Die Integration der Phase durch den Frequenzmodulator führt zu einer sogenannten Trellis-Struktur der Phasentrajektorien. Die damit implizierte Trellis-Codierung der Daten trägt wesentlich zur vorteilhaft hohen Leistungseffizienz den CPM-Verfahrens bei.

In der oben zitierten US-4,750,192 wird erstmals beschrieben, wie die in einem vorgegebenen Frequenzband liegende spektrale Leistung eines CPM-Signals systematisch optimiert werden kann. Und zwar wird dies dadurch erreicht, dass nicht mehr ein geeigneter Elementarpuls erzeugt wird, welcher mit den eingelesenen Daten multipliziert und zur Erzeugung eines Basisbandsignals zeitverschoben überlagert wird, sondern dass eine Bank von Basisbandsignalwerten fest abgespeichert wird und dass entsprechend den eingelesenen Daten die zugehörigen Werte direkt ausgespeichert werden.

Diese Bank umfasst also alle möglichen Werte des Basisbandsignals. Die Werte werden bei der Auslegung des Systems auf die zu übertragenden Daten in dem Sinne optimal ausgerichtet, dass in einem Frequenzband gegebener Breite der grösstmögliche Teil der spektralen Signalleistung liegt. Unter den in der genannten Patentschrift festgelegten Nebenbedingungen ist das Uebertragungssignal damit optimal bezüglich Bandbreite.

Es stellt sich nun die Frage, ob sich das Spektrum des Signals unter gewissen Umständen nicht noch stärker "konzentrieren" lässt.

## Darstellung der Erfindung

Aufgabe der Erfindung ist es, ein Verfahren zur Uebertragung von digitalen Daten der eingangs genannten Art zu schaffen, welches eine gegenüber dem Stand der Technik verbesserte Bandbreiteneffizienz besitzt.

Erfindungsgemäss besteht die Lösung darin, dass die Trägerschwingung zur Verbesserung der spektralen Effizienz zusätzlich einer Amplitudenmodulation unterzogen wird, welche die Eigenschaft hat, dass der innerhalb eines gegebenen Frequenzbandes liegende Teil der spektralen Leistung der modulierten Trägerschwingung vergrössert wird.

Der Kern der Erfindung liegt darin, dass bei der Optimierung des Basisbandsignals auf die Forderung der konstanten Hüllkurve verzichtet wird. Das Uebertragungssignal ist damit nicht mehr nur phasen-, sondern auch amplitudenmoduliert. Die Amplitude des Signals enthält aber als solche keine Information. Sie ist allein dazu da, die spektralen Eigenschaften des CPM-Signals zu verbessern.

Auf den ersten Blick mag es erscheinen, dass durch den Verzicht auf eine konstante Hüllkurve prinzipielle Vorteile des CPM-Verfahrens, wie z.B. (a) Unempfindlichkeit gegenüber Nichtlinearitäten des Senders oder (b) keine Notwendigkeit zur absoluten Skalierung der Amplitude (im Gegensatz zu einem mehrstufigen QAM-Verfahren), verloren gehen. Es zeigt sich aber, dass dem nicht so ist. Die Amplitude variiert nämlich nur geringfügig - trotz markanter Verbesserung der spektralen Effizienz. Insbesondere bleibt der unter (b) genannte Vorteil des CPM-Verfahrens erhalten.

Bevorzugte Ausführungsformen der Erfindung ergeben sich aus den abhängigen Patentansprüchen.

## Kurze Beschreibung der Zeichnung

Nachfolgend soll die Erfindung unter Berücksichtigung des mathematischen Hintergrundes anhand von Ausführungsbeispielen im Zusammenhang mit der Zeichnung näher erläutert werden. Es zeigen:

Fig. 1 ein Blockschaltbild einer Vorrichtung zur Uebertragung von digitalen Daten;

Fig. 2 ein Blockschaltbild eines Senders für erfindungsgemässe CPM-Signale;

Fig. 3 eine vergleichende Darstellung der Ausserband-Leistung eines erfindungsgemässen Signals mit derjenigen eines bekannten Signals; und

Fig.4 eine Darstellung des Amplitudenverlaufs eines erfindungsgemässen, beispielhaften Basisbandsignals.

## Wege zur Ausführung der Erfindung

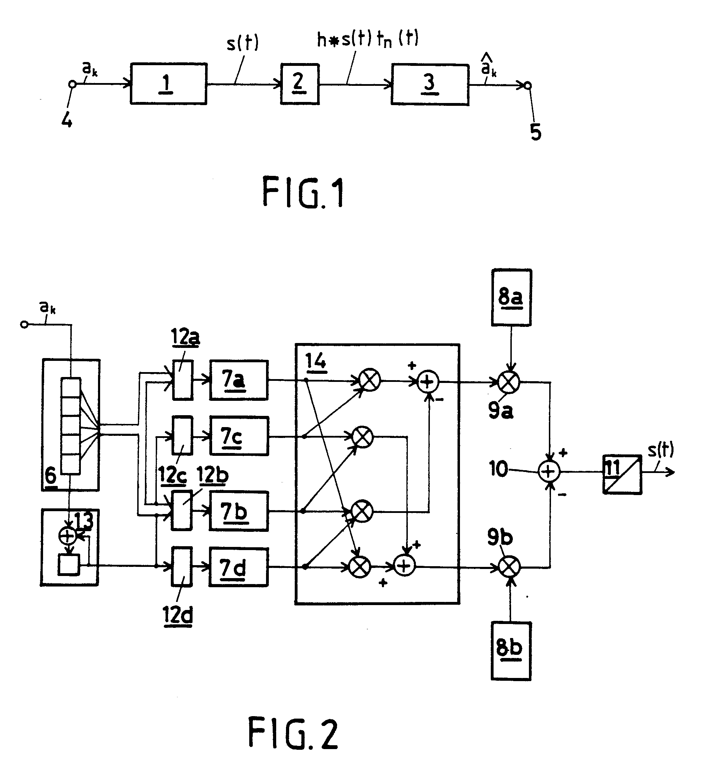

Fig. 1 zeigt ein grobes Blockschaltbild einer Vorrichtung zur Uebertragung von digitalen Daten. Ein Sender 1 liest aus einer Datenquelle 4 digitale Daten in Form einer Folge von Symbolen $a_k$ ein und erzeugt eine modulierte Trägerschwingung s(t). Diese wird bei der Uebertragung zu einem Empfänger 3 von einem Kanal 2 verändert (aufgrund seiner Stossantwort h(t) und einem Rauschen n(t)). Der Empfänger 3 demoduliert das empfangene Signal h*s(t) + n(t) und gibt eine Folge von geschätzten Symbolen $\hat{a}_k$ an eine Datensenke 5 aus. Idealerweise stimmen ursprüngliche und geschätzte Symbole überein, d.h. $\hat{a}_k = a_k$.

Fig. 2 zeigt ein Blockschaltbild einer bevorzugten Ausführungsform des Senders 1 zum Erzeugen einer erfindungsgemäss modulierten Trägerschwingung. Die Symbole $a_k$ sind M-wertig (M = vorgegebene ganze Zahl) und werden mit einer Rate 1/T in ein (zumindest} L-stufiges Schieberegister 6 eingelesen. Jedem Symbol $a_k$ kommt also eine Symboldauer T zu.

Nach Massgabe der durch eine Gedächtnislänge L gegebenen letzten L Symbole $a_{k-(L-1)}, .. , a_k$ wird nun ein Teilsignal eines Basisbandsignals erzeugt. Dies geht so vor sich, dass aufgrund des aktuellen Zustandes des L-stufigen Schieberegisters 6 mit Hilfe von Adressgenerator 12a resp.12b der Speicherplatz des zugeordneten, in einem Speicher 7a resp. 7b fest abgespeicherten Teilsignals ermittelt wird und das entsprechende Teilsignal ausgespeichert wird.

Um aus den Teilsignale ein Basisbandsignal mit korrekter Phasenlage zu erhalten, summiert ein Akkumulator 13, welcher der letzten Stufe des Schieberegisters 6 nachgeschaltet ist, die alten Symbolwerte auf, gibt den entsprechenden Wert an zwei Adressgeneratoren 12c, 12d weiter, welche dann aus zwei weitern Speichern 7c, 7d die entsprechenden Inphasen- und Quadraturwerte ausspeichern. Ein Phasenschieber 14 erzeugt aus den Teilsignalen und der Phasenlage das Basisbandsignal, indem er im wesentlichen eine komplexe Multiplikation durchführt.

Das Teilsignal besteht also aus einer vorgegebenen Anzahl N von Inphasen- und Quadraturwerten. Die N Wertepaare haben einen zeitlichen Abstand T/N.

Die Speicher 7a und 7b enthalten alle $M^L$ möglichen Teilsignale. Da jedes Teilsignal aus N Inphasen- und N Quadraturwerten besteht muss jeder der beiden Speicher 7a, 7b $NM^L$ Digitalwerte abspeichern können.

Zur Erzeugung der modulierten Trägerschwingung s(t) werden die Inphasen- und Quadraturwerte des Basisbandsignals (d.h. der hintereinander erzeugten Teilsignale) in einem Multiplizierer 9a resp. 9b mit den aus zwei weiteren Speichern 8a,8b ausgespeicherten Inphasen- und Quadraturwerten einer Trägerschwingung multipliziert. Das von den beiden Multiplizierern 9a und 9b gelieferte Wertepaar wird in einem Addierer 10 addiert. Ein nachgeschalteter Digital/Analog-Wandler 11 erzeugt schliesslich das Uebertragungssignal s(t).

Die Erfindung zielt nun darauf ab, die Trägerschwingung einer Amplitudenmodulation zu unterziehen, welche zur Folge hat, dass der innerhalb eines gegebenen Frequenzbandes liegende Teil der spektralen Leistung vergrössert wird. Bei einer Vorrichtung gemäss Fig. 2 lässt sich dies dadurch erreichen, dass die Speicher 7a,7b mit geeigneten Digitalwerten versehen werden. Diese werden bei der Auslegung des Systems in Abhängigkeit von der Statistik der Symbole $a_k$ im voraus berechnet.

Im folgenden wird nun erläutert, wie die optimalen Teilsignale, und damit ein optimales Basisbandsignal, ermittelt werden können.

Bekanntlich kann das Uebertragungssignal s(t) in komplexer Schreibweise dargestellt werden als

$s(t) = Re\{ exp(j2\pi f_c t)v(t) \}$     (I)

$f_c$ = Trägerfrequenz

Dabei bezeichnen $exp(j2\pi f_c t)$ die Trägerschwingung und v(t) das modulierende Basisbandsignal

$$v(t) = \sum_{k=-\infty}^{\infty} c_k' r(t-kT) \qquad (II)$$

$c_k$ und r(t-kT) sind $M^L$-dimensionale Vektoren. M bezeichnet dabei die Wertigkeit der Symbole $a_k$ und L eine vorgebbare Gedächtnislänge (Länge des Schieberegisters 6). Die Definition von $c_k$ wurde bereits in der US-4,750,192 gegeben. Sie sei der Vollständigkeit halber hier wiederholt:

$c_k = exp(j\Theta_k)e(i_k)$     (III)

$\Theta_k$ ist die bei der Frequenzmodulation akkumulierte Phase und $e(i_k)$ der Einheitsvektor in Richtung des aktuellen Zustands $i_k$ im Zustandsraum des Schieberegisters 6 der Länge L.

Im Unterschied zu der aus der bekannten Definition wird jetzt r(t-kT) wie folgt definiert:

$$r(t) = \begin{bmatrix} \tau_0(t)exp(jq_0(t)) \\ \vdots \\ \tau_{M^L-1}(t)exp(jq_{M^L-1}(t)) \end{bmatrix} , 0 \leq t \leq T \qquad (IV)$$

$\tau_i(t)$ bezeichnet die erfindungsgemäss zeitlich variierende Amplitude der Hüllkurve. Die komplexen Komponenten von r(t) stellen alle möglichen Teilsignale (mit der durch die Symboldauer T gegebenen Länge) des Basisbandsignals dar. Das Skalarprodukt $c_k' r(t)$ wählt damit für jedes Intervall der Länge T die richtige Wellenform.

Die zu optimierende Grösse ist die innerhalb eines Frequenzbandes der Breite 2B liegende spektrale Leistung $P_B$ des Basisbandsignals. Sie ist gemäss US-4,750,192 gegeben durch

$P_B = r' P(B)r^*$     (V)

( ' = transponiert, * = konjugiert komplex). r bezeichnet einen $NM^L$-dimensionalen Vektor, welcher aus r(t) gemäss

$$r = \begin{bmatrix} r(0) \\ \vdots \\ r(iT/N) \\ \vdots \\ r((N-1)T/N) \end{bmatrix} \qquad (VI)$$

gebildet wird. P(B) ist eine $NM^L$ x $NM^L$-Matrix mit den Elementen

$$P_{km}(B) = \int_{-B}^{B} P_c(f)\exp(j2\pi fT(m-k)/N)\, df \qquad\qquad (VII)$$

$$k,m = 0,..,N-1$$

$$P_c = \sum_{n=-\infty}^{\infty} E[c_k c^+_{k-n}]\exp(j2\pi fnT) \qquad\qquad (VIII)$$

($E[.]$ = Erwartungswert). P(B) ist eine Block-Toeplitz, positiv definite, Hermite'sche Matrix.

Erfindungsgemäss wird nun aber nicht die Grösse $P_B$ selbst, sondern die als relative Inband-Leistung bezeichnete Grösse $\Gamma_B$ maximiert:

$$\Gamma_B = \frac{r'P(B)r^*}{r'P(\infty)r^*} \qquad\qquad (IX)$$

Die Maximierung erfolgt in Bezug auf die Komponenten von r unter Vorgabe der Gedächtnislänge L, der Wertigkeit M und des Modulationsindexes h (siehe dazu US-4,750,192). Für den Fall, dass die Symbole gleichverteilt und unabhängig sind, vereinfacht sich die relative Inband-Leistung $\Gamma_B$ zu

$$\Gamma_B = \frac{r'P(B)r^*}{\|r\|^2} \qquad\qquad (X)$$

Die Komponenten von r können beliebige komplexe Werte annehmen und sind nicht mehr auf den Einheitskreis beschränkt. Entsprechend wird es bei der Signalübertragung zu einer Amplitudenmodulation kommen. Das Basisbandsignal v(t) ist also von der Form

$v(t) = v_0(t)\exp(j\phi(t))$ , (XI)

wobei zu ganzzahligen Vielfachen der Symboldauer T das Basisbandsignal ein Basisbandsignal mit konstanter Hüllkurve approximiert.

Die Optimierung der Formel (IX) resp. (X) ist gleichbedeutend mit der Lösung eines Eigenwertproblems. $\Gamma_B$ kann nämlich als Rayleighkoeffizient der Matrix P(B) betrachtet werden. Die Maximierung von $\Gamma_B$ ist damit durch den Eigenvektor des grössten Eigenwerts der Matrix P(B) gegeben.

Durch das Ueberführen des Optimierungsproblems in das bezeichnete Eigenwertproblem wird vor diesem neuen theoretischen Hintergrund nun auch einsichtig, dass der Verzicht auf eine konstante Hüllkurve trotzdem zu vernünftigen Basisbandsignalen (im Sinn von hoher Leistungseffizienz bei geringer Bandbreite) führen wird.

Die Maximierung der relativen Inband-Leistung $\Gamma_B$ kann mit bekannten numerischen Algorithmen durchgeführt werden. Die als Lösung resultierenden N komplexen Vektoren r(0),.., r((N-1)T/N) gemäss Formel (VI) werden aufgeteilt nach Inphasen- und Quadraturwert in den Speichern 7a und 7b abgelegt. Das Ausspeichern geht dann auf bekannte Weise (siehe US-4,750,192) so vor sich, dass durch $c_k$ (d.h. durch den aktuellen Zustand des Schieberegisters 6) eine bestimmte Komponente der genannten N Vektoren r(0)-,.., r((N-1)T/N) ausgewählt wird und dann hintereinander die entsprechenden N Inphasen- und Quadraturwerte ausgegeben werden.

Da die CPM-Punkte (Phasenwerte des Basisbandsignals zu ganzzahligen Vielfachen der Symboldauer T) eines erfindungsgemässen Signals näherungsweise mit denjenigen eines Signals mit konstanter Hüllkurve übereinstimmen, ist zu erwarten, dass die erfindungsgemässe Amplitudenmodulation nur schwach sein wird. Mit der Erfindung wird gleichsam eine spektral effizientere Interpolation zwischen den CPM-Punkten geschaffen.

Es ist zu betonen, dass die eigentliche Information immer noch durch die Phase, und nicht durch die Amplitude (wie etwa beim QAM-Verfahren) übertragen wird. Ebenso muss der Empfänger 3 die Amplitude des Signals nicht betragsmässig auswerten. Zur Demodulation muss der Empfänger 3 nur mit einem geeigneten Satz von sogenannten Matched Filtern ausgerüstet werden. Insbesondere kann die Entflechtung der Trellis-Struktur der Phase nach den bekannten Methoden durchgeführt werden (siehe beispielsweise "Continuous Phase Modulation - Part II: Partial Response signalling", T. Aulin, N. Rydbeck und Carl-Erik W. Sundberg, IEEE Trans. on Communications, Vol. COM-29, No.3, März 1981, p.210-225).

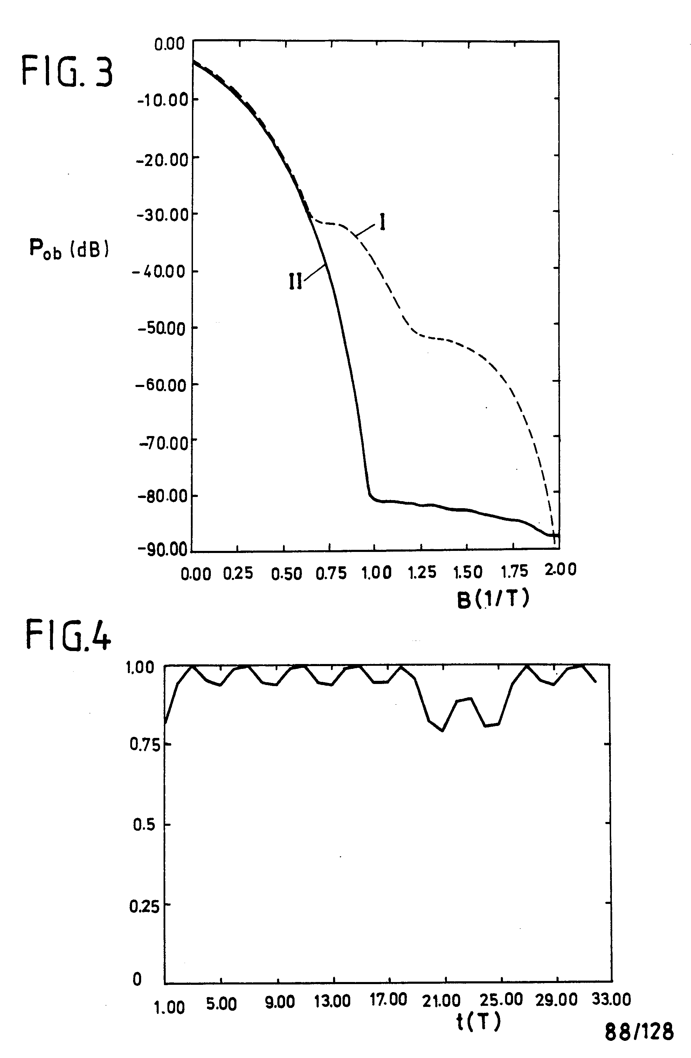

Zur Veranschaulichung der Vorteile der Erfindung wird in der Fig. 3 die relative spektrale Ausserband-Leistung $P_{ob}$ (Komplement zur relativen Inband-Leistung $\Gamma_B$) eines erfindungsgemässen Signals mit derjenigen eines im Stand der Technik oft verwendeten Signals verglichen. In der Darstellung der Fig. 3 ist auf der Abszisse die Bandbreite B in Einheiten von 1/T aufgetragen.

Die Parameterwerte wurden wie folgt festgesetzt: Gedächtnislänge L = 2, Wertigkeit M = 2, Modulationsindex h = 1/2. Als Vergleichssignal wurde ein RC-Puls (Raised Cosine) gewählt. Kurve I zeigt den Verlauf von $P_{ob}$ beim RC-Puls und Kurve II denjenigen des erfindungsgemässen Signals. Während Kurve II bereits bei einer Bandbreite von 1/T auf ca. -80 dB abfällt, erreicht Kurve I erst bei der doppelten Bandbreite vergleichbar kleine werte.

Fig. 4 zeigt schliesslich einen repräsentativen Ausschnitt aus dem der Kurve II zugrunde liegenden Basisbandsignal. Auf der Abszisse ist die Zeit in Einheiten der Abtastdauer T/N für N = 4 und auf der Ordinate die normierte Amplitude aufgetragen. Aus dieser Darstellung ist zu entnehmen, dass die Amplitude gemäss der Erfindung nur relativ schwach moduliert wird.

Zusammenfassend kann gesagt werden, dass durch die Erfindung eine markante Steigerung der spektralen Effizienz erreicht werden kann, ohne die wesentlichen Vorteile der CPM-Uebertragung zu verlieren.

**Ansprüche**

1. Verfahren zur Uebertragung von digitalen Daten mittels kontinuierlicher Phasenmodulation, bei welchem in einem Sender (1)

a) digitale Daten als Folge von symbolen $a_k$ mit einer Symboldauer T eingelesen werden,

b) nach Massgabe der durch eine Gedächtnislänge L gegebenen letzten L Symbole $a_{k-(L-1)}$, .. , $a_k$ ein Teilsignal eines Basisbandsignals erzeugt wird, wobei das Teilsignal eine der Symboldauer T entsprechende Länge hat, und

c) eine Trägerschwingung entsprechend dem Basisbandsignal einer kontinuierlichen Phasenmodulation unterzogen wird,

dadurch gekennzeichnet, dass

d) die Trägerschwingung zur Verbesserung der spektralen Effizienz zusätzlich einer Amplitudenmodulation unterzogen wird, welche die Eigenschaft hat, dass der innerhalb eines gegebenen Frequenzbandes liegende Teil der spektralen Leistung der modulierten Trägerschwingung vergrössert wird.

2. Verfahren nach Anspruch 1, dadurch gekennzeichnet, dass die Amplitudenmodulation den innerhalb eines gegebenen Frequenzbandes liegenden Teil der spektralen Leistung der modulierten Trägerschwingung maximiert.

3. Verfahren nach Anspruch 2, dadurch gekennzeichnet, dass die Trägerschwingung $\exp(j2\pi f_c t)$ durch das Basisbandsignal v(t) gemäss

$s(t) = Re\{ \exp(j2\pi f_c t)v(t) \}$

$f_c$ = Trägerfrequenz

moduliert wird, wobei das Basisbandsignal v(t)

$$v(t) = \sum_{k=-\infty}^{\infty} c_k' r(t-kT)$$

die relative Inband-Leistung $\Gamma_B$

$$\Gamma_B = \frac{\underline{r}'P(B)\underline{r}^*}{\underline{r}'P(\infty)\underline{r}^*}$$

maximiert.

4. Verfahren nach Anspruch 2, dadurch gekennzeichnet, dass das Basisbandsignal v(t) von der Form

v(t) = v₀(t)exp(jφ(t))

ist, wobei zu ganzzahligen Vielfachen der Symboldauer T das Basisbandsignal ein Basisbandsignal mit konstanter Hüllkurve approximiert.

5. Verfahren nach Anspruch 1, dadurch gekennzeichnet, dass das Teilsignal dadurch erzeugt wird, dass aus einem Speicher (7a,7b) eine gegebene Anzahl N von entsprechenden Inphasen- und Quadraturwerten mit einer Rate N/T ausgespeichert wird.

6. Vorrichtung zur Uebertragung von digitalen Daten mittels kontinuierlicher Phasenmodulation, umfassend einen Sender (1) zum Erzeugen einer modulierten Trägerschwingung und einen Empfänger (3) zum Demodulieren der Trägerschwingung, wobei im Sender (1)

a) die digitalen Daten als Folge von Symbolen $a_k$ mit einer Rate 1/T in ein zumindest L-stufiges Schieberegister (6) eingelesen werden,

b) zur Erzeugung eines Basisbandsignals entsprechend den im Schieberegister (6) vorliegenden Symbolen $a_{k-(L-1)}$, .. , $a_k$ aus zumindest einem Speicher (7a,7b) eine gegebene Anzahl N von Inphasen- und Quadraturwerten eines Teilsignals des Basisbandsignals mit einer Datenrate N/T ausgespeichert werden

c) zur Erzeugung der phasenmodulierten Trägerschwingung Mittel vorgesehen sind, um die Inphasen- und Quadraturwerte des Basisbandsignals mit Inphasen- und Quadraturwerten einer Trägerschwingung zu multiplizieren, und

d) zur Signalübertragung die modulierte digitale Trägerschwingung in einem Digital/Analog-Wandler (11) in ein analoges Signal transformiert werden, dadurch gekennzeichnet, dass

e) die in dem zumindest einen Speicher (7a,7b) abgespeicherten Inphasen- und Quadraturwerte zur Verbesserung der spektralen Effizienz die Eigenschaft haben, dass sie zusätzlich eine Amplitudenmodulation aufweisen, wobei Phasen- und Amplitudenmodulation derart aufeinander abgestimmt sind, dass der innerhalb eines gegebenen Frequenzbandes liegende Anteil der spektralen Leistung des Basisbandsignals maximal ist.

$s(t)$  $h*s(t) t_n (t)$

$a_k$

| 1 | | 2 | | 3 | $\hat{a}_k$ |

4  5

# FIG.1

$a_k$

8a

12a

14

7a

7c

12c  12b

6

13

7b

9a

10  11  $s(t)$

7d

9b

12d

8b

# FIG.2

FIG. 3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 250 924 (BBC)<br>* Ansprüche * & US-A-4 750 192 (Kat. D)<br>--- | 1,6 | H 04 L 27/20 |
| A | THE BELL SYSTEM TECHNICAL JOURNAL, Band 59, Nr. 4, April 1980, Seiten 557-570, US AT&T Co., New York, N.Y., US; J. SALZ et al.: "Spectral Shaping by Simultaneous Amplitude and Frequency Modulation"<br>* Seite 557, Zusammenfassung; Seite 557, "Introduction", Zeile 1 - Seite 558, Zeile 7; Seite 558, Zeile 34 - Seite 559, Zeile 1 *<br>--- | 1 | |
| A | IEEE TRANSACTIONS ON COMMUNICATIONS, Band COM-26, Nr. 5, Mai 1978, Seiten 543-551, IEEE, New York, N.Y., US; W. WEBER et al.: "A Bandwidth Compressive Modulation System Using Multi-Amplitude Minimum Shift Keying (MAMSK)"<br>----- | | |

**RECHERCHIERTE SACHGEBIETE (Int. Cl.5)**

H 04 L

Der vorliegende Recherchenbericht wurde für alle Patentansprüche erstellt

| Recherchenort | Abschlußdatum der Recherche | Prüfer |
|---|---|---|
| DEN HAAG | 12-03-1990 | VEAUX,C.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)